# EUROPEAN PATENT SPECIFICATION

(11) **EP 4 376 207 B1**
(45) Date of publication and mention of the grant of the patent: **31.12.2025**
(21) Application number: 23824167.3
(22) Date of filing: 12.06.2023
(51) Int. Cl.: H01M 50/531, H01M 50/553, H01M 50/15, H01M 50/103, H01M 50/296

(54) **SECONDARY BATTERY HAVING IMPROVED TERMINAL STRUCTURE**
SEKUNDÄRBATTERIE MIT VERBESSERTER ANSCHLUSSSTRUKTUR
BATTERIE SECONDAIRE AYANT UNE STRUCTURE DE BORNE AMÉLIORÉE

(30) Priority: 14.06.2022 KR 20220071855
(43) Date of publication of application: 29.05.2024
(73) Proprietor: LG ENERGY SOLUTION, LTD., Seoul 07335 (KR)
(72) Inventor: KO, Young Jun, Daejeon 34122 (KR); SUNG, Joo Hwan, Daejeon 34122 (KR); JUNG, Kyung Hwan, Daejeon 34122 (KR)
(74) Representative: Goddar, Heinz J.
(86) International application number: PCT/KR2023/007992
(87) International publication number: WO 2023/243950

(56) References cited:
- WO-A1-2019/050180
- JP-B2- 6 243 197
- KR-A- 20140 094 207
- KR-A- 20160 150 405
- KR-A- 20160 150 405
- KR-B1- 101 627 631
- US-B1- 6 982 131

## Description

This application claims the benefit of priority based on Korean Patent Applications No. 10-2022-0071855, filed on June 14, 2022.

### [Technical Field]

The present invention relates to a secondary battery, and more particularly to a prismatic secondary battery having an improved terminal structure, wherein the arrangement structure of the positive and/or negative terminals can be easily changed and electrical connection to a plurality of secondary batteries can be facilitated.

### [Background Technology of the Invention]

Unlike primary batteries, secondary batteries are rechargeable and have been extensively researched and developed recently due to potential for miniaturization and high capacity applications. With the increasing technological advancements and demand for mobile devices, as well as the growing prominence of electric vehicles and energy storage systems in response to environmental concerns, the demand for secondary batteries as an energy source is rapidly increasing.

Depending on the shape of the battery case, secondary batteries are classified into coin-type batteries, cylindrical batteries, prismatic batteries, and pouch-type batteries. An electrode assembly, which is installed inside the battery case in secondary batteries, is a power generation element capable of charge and discharge. It has a laminated structure of electrodes and separators.

Electrode assemblies can be broadly categorized into three types: a Jellyroll type, which involves winding a positive electrode and a negative electrode of an active material-coated sheet with a separator interposed therebetween; a stack type, where a plurality of positive electrodes and negative electrodes are sequentially stacked with a separator interposed therebetween; and a Stack & Folding type, where unit cells of a stack type are wound with a long separator film.

When looking at prismatic secondary batteries among various types of secondary batteries, it is common for the positive and negative terminals to be arranged together on one side or to be placed on opposite sides. The placement of these terminals is determined by the design specifications of various devices that use prismatic secondary batteries. Adhering to these design specifications, the arrangement of the positive and negative terminals must be separately designed each time, even within the same form factor, which can be quite labor-intensive.

In addition, to assemble a plurality of secondary batteries into modules or packs, electrical connections like busbars are required, and designing these busbars can also be complicated because it depends on the arrangement structure of the positive and negative terminals. WO 2019/050180 A1 and KR 10-2016-0150405 A describe respective designs of secondary batteries wherein a bus bar connection portion is moved to a lateral side of a case of the secondary battery.

### [Prior Art Documents]

(Patent Document 001) Korean Patent Publication No. 10-2019-0102816 (published on September 4, 2019)

### [Description of the Invention]

### [Technical Problem]

The present invention aims to provide a new prismatic secondary battery that can easily change the arrangement structure of a positive and negative terminal provided in the prismatic secondary battery without changing the design, and furthermore, to facilitate the electrical connection of a plurality of secondary batteries.

However, the technical problems that the present invention seeks to address are not limited to those described above, and other problems not mentioned will be apparent to those of ordinary skill in the art from the following description of the invention.

### [Technical Solution]

The present invention relates to a secondary battery with a positive terminal and a negative terminal spaced apart on the top surface of a hexahedral shape battery case, wherein the secondary battery includes a terminal structure including a terminal body which is made of insulating resin material and coupled to a top surface of the battery case and one or more faces extending from the top surface while enclosing the positive terminal or the negative terminal so that it is not exposed, and an extension terminal electrically connected to the positive terminal or the negative terminal and exposed to any one surface of the terminal bodies except the top surface, and having a connection terminal facing the thickness direction of the secondary battery on the extension terminal.

In an exemplary embodiment of the present invention, an extension wire electrically connecting the extension terminal to the positive terminal or negative terminal is not exposed outside the terminal body.

In addition, an extension wire electrically connecting the extension terminal to the positive terminal or negative terminal may be insulated from the outside.

The terminal body is coupled to the top surface of the battery case and a side surface extending from the top surface, and the extension terminal is exposed on the side surface. In addition, the terminal structure is coupled to the positive and negative terminals one by one.

In an exemplary embodiment of the present invention, the connection terminal extends in either one or both directions along the thickness direction.

The connection terminal may be electrically connected to an extension terminal or connection terminal of another adjacent secondary battery.

For example, a plurality of secondary batteries is aligned in a thickness direction, and the connection terminals provided on each secondary battery are connected in series or parallel to the extension terminals or connection terminals of an adjacent secondary battery.

Additionally, the connection terminal may be integrally formed with the extension terminal.

Meanwhile, the end of the connection terminal may form a slot open in the thickness direction.

In such exemplary embodiment, a connection terminal of an adjacent secondary battery may be inserted into the slot of the connection terminal.

### [Advantageous Effects]

The secondary battery of the present invention with the above configuration can easily change the arrangement structure of the positive and/or negative terminals by coupling the terminal structure to a corner part of the top surface of the secondary battery. Therefore, it is possible to reduce the development and production costs of prismatic secondary batteries by controlling the position of the terminals freely without affecting the existing cell internal manufacturing process.

In addition, by providing a binding member on the terminal structure, it is possible to directly connect the terminal structures without a separate busbar when connecting a plurality of secondary batteries in a series, parallel, or series-parallel circuit along the thickness direction, thereby simplifying the structure and reducing manufacturing costs when manufacturing battery modules or packs.

However, the technical effects of the present invention are not limited to those described above, and other effects not mentioned will be apparent to one of ordinary skill in the art from the following description of the invention.

### [Brief Description of the Drawings]

The following drawings accompanying this specification illustrate preferred exemplary embodiments of the present invention and are intended to serve as a further understanding of the technical ideas of the present invention in conjunction with the detailed description of the invention that follows, so the present invention is not to be construed as limited to what is shown in such drawings.
FIG. 1 is a perspective view of a secondary battery according to the present invention.
FIG. 2 is a perspective view of a coupled structure of a secondary battery and a terminal structure according to the present invention.
FIG. 3 is a diagram illustrating various embodiments of a connection terminal.
FIG. 4 is a diagram illustrating a structure in which two secondary batteries are connected in parallel through a connection terminal.
FIG. 5 is a diagram illustrating a structure in which three secondary batteries are connected in series through a connection terminal.
FIG. 6 is a diagram illustrating a connection terminal according to another exemplary embodiment of the present invention.
FIG. 7 is a diagram illustrating a structure in which a plurality of secondary batteries is electrically connected using the connection terminal of FIG. 6.

### [Best Mode for Invention]

The present invention may have various modifications and various examples, and specific examples are illustrated in the drawings and described in detail in the description.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

The present invention relates to a secondary battery, and in particular to a secondary battery having spaced apart positive and negative terminals on the top surface of a battery case having a hexahedral shape.

In one example, a secondary battery according to the present invention has a terminal structure coupled to at least one top surface edge of the battery case. The terminal structure includes a terminal body coupled to a top surface of the battery case and one or more surfaces leading up to the top surface while enclosing a positive or negative terminal from being exposed, and an extension terminal electrically connected to the positive terminal or the negative terminal and exposed on any one surface of the terminal body except the top surface.

In addition, the terminal structure also includes a connection terminal provided on the extension terminal and facing the thickness direction of the secondary battery. The connection terminal is an extended terminal in which the thickness-aligned secondary batteries electrically connect the extension terminal of the terminal structure, respectively, and a plurality of secondary batteries can be electrically connected by the connection terminal.

As such, the secondary battery of the present invention including the terminal structure can freely change the position of the positive and negative terminals arranged on the upper surface of the battery case to meet the needs of the user without any design changes by simply applying the terminal structure, thereby reducing the production cost of the prismatic secondary battery.

In addition, by providing connection terminals on the terminal structure, it is possible to directly connect the terminal structures to one another when connecting a plurality of secondary batteries in a series/parallel/series-parallel circuit along the thickness direction without a separate busbar, thereby simplifying the structure and reducing manufacturing costs when manufacturing battery modules or packs.

### [Mode for invention]

Hereinafter, specific embodiments of the present invention will be described in detail with reference to the accompanying drawings. For reference, the directions of front, back, up, down, left, and right used in the following description to designate relative positions are intended to aid in the understanding of the invention, and refer to the directions shown in the drawings unless otherwise specified.

### (First Embodiment)

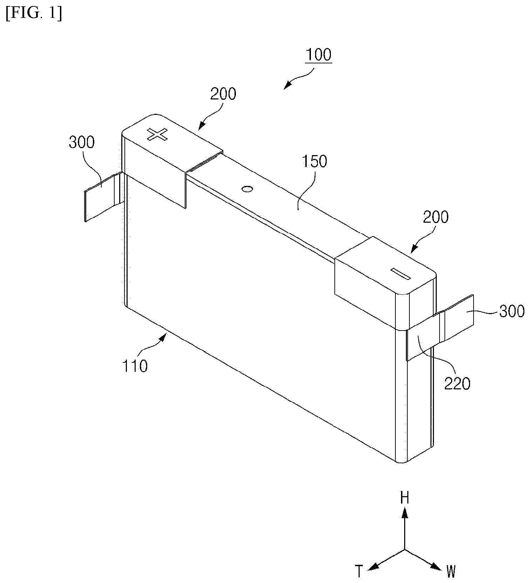

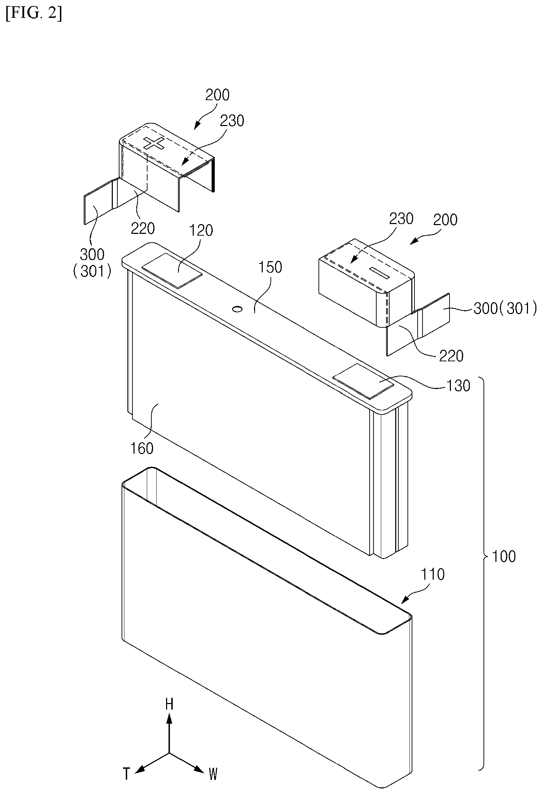

FIG. 1 is a perspective view of a secondary battery 100 according to the present invention, and FIG. 2 is a perspective view of a coupled structure of a secondary battery 100 and a terminal structure 200 according to the present invention.

Referring to FIGS. 1 and 2, the present invention relates to a secondary battery 100, and in particular to a prismatic secondary battery 100 having a positive terminal 120 and a negative terminal 130 spaced apart on a top surface of a battery case 110 forming a hexahedral shape. Here, the prismatic secondary battery 100 illustrated in the drawings is an example, and the ratio of width to length and height may vary. However, for ease of explanation, reference will be made to the orientations of front to back and top to bottom with reference to the accompanying drawings. For example, a side on which the positive terminal 120 and the negative terminal 130 are disposed is called the top surface, and the opposite side facing it is called the bottom surface.

Further, the coordinate axes shown in FIGS. 1 and 2 designate a width direction W, a thickness direction T, and a height direction H of the secondary battery 100. The width direction W designates a direction across the positive terminal 120 and the negative terminal 130, the thickness direction T designates a depth direction (relative to the ground) perpendicular to the width direction W, and the height direction H designates a direction perpendicular to both the width direction W and the thickness direction T.

The secondary battery 100 of the present invention includes a terminal structure 200. The terminal structure 200 is a hinge-like structure that couples to at least one top edge of the battery case 110, and includes a terminal body 210 and an extension terminal 220.

The terminal body 210 refers to a body of the terminal structure 200 that is coupled to the top surface of the battery case 110 and one or more surfaces (such as a side, front, rear, etc.) extending from the top surface while enclosing the positive terminal 120 or the negative terminal 130 from being exposed to the outside.

The extension terminal 220 refers to a terminal of the terminal structure 200 that is electrically connected to the positive terminal 120 or negative terminal 130, but is exposed on any surface of the terminal body 210 other than the top surface. In other words, the positive terminal 120 and negative terminal 130 are enclosed by the terminal body 210 and are not exposed, so the extension terminal 220 functions as a new positive terminal 120 and negative terminal 130 located on a surface other than the top surface.

Therefore, the secondary battery 100 of the present invention can freely change the positions of the positive terminal 120 and the negative terminal 130 disposed on the top surface of the battery case 110 without any design changes by simply applying the terminal structure 200. Accordingly, the present invention can easily change the positions of the positive terminal 120 and the negative terminal 130 using the terminal structure 200 for the prismatic secondary battery 100 having the same form factor, thereby reducing the production cost of the prismatic secondary battery 100.

Further, the terminal structure 200 includes a connection terminal 300 provided on the extension terminal 220. The connection terminal 300 extends toward the thickness direction T of the secondary battery 100, and the connection terminal 300 refers to a second terminal or an extended terminal electrically connected to the extension terminal 220 or the connection terminal 300 of another neighboring secondary battery 100. The connection terminal 300 extends in the thickness direction T of the secondary battery 100, and a plurality of secondary batteries 100 aligned in the thickness direction T may be electrically connected by such connection terminal 300.

As such, by providing the connection terminal 300 on the terminal structure 200, it is possible to make a direct connection between the terminal structures 200, so that a plurality of secondary batteries 100 can be electrically connected to each other by connecting them directly through the connection terminal 300 without a separate busbar, thereby simplifying the structure and reducing the manufacturing cost when manufacturing a battery module or pack.

In one exemplary embodiment of the present invention, the positive terminal 120 or negative terminal 130 and the extension terminal 220 are electrically connected via an extension wire 230, which is not exposed to the outside of the terminal body 210. Further, the extension wire 230 is insulated from the outside. For example, the extension wire 230 and the extension terminal 220 may be embedded in the terminal body 210 of an insulating resin material, such as by insert molding. This prevents the extension wire 230 from being damaged, shorted, or the like by leaving only the extension terminal 220 exposed to the outside. Note that the extension wire 230 and the extension terminal 220 may be integrally constructed, or may be separate parts that are coupled to the terminal body 210.

According to the specific embodiment shown, the terminal body 210 is coupled to the top surface of the battery case 110 and one side surface extending from the top surface, and the extension terminal 220 is exposed on the one side surface. Accordingly, the positions of the positive terminal 120 and the negative terminal 130, which were located on the top surface of the battery case 110, are moved to the side surface.

Furthermore, the terminal structure 200 may be coupled to the positive terminal 120 and the negative terminal 130 one by one, whereby the positive terminal 120 and the negative terminal 130 are disposed one by one on sides opposite to each other. In other words, the positive terminal 120 and the negative terminal 130, which were disposed together on the top surface of the battery case 110, are moved to their respective adjacent side surfaces, whereby the initial prismatic secondary battery 100, which was designed as a unidirectional secondary battery, is converted into a bidirectional secondary battery.

In addition, the terminal structure 200 can then be further attached to the completed secondary battery 100, or alternatively, as shown in FIG. 2, the terminal structure 200 can be manufactured by first coupling the terminal structure 200 to the cap plate 150 that comprises the top surface of the battery case 110 prior to enclosing the electrode assembly 160 in the battery case 110.

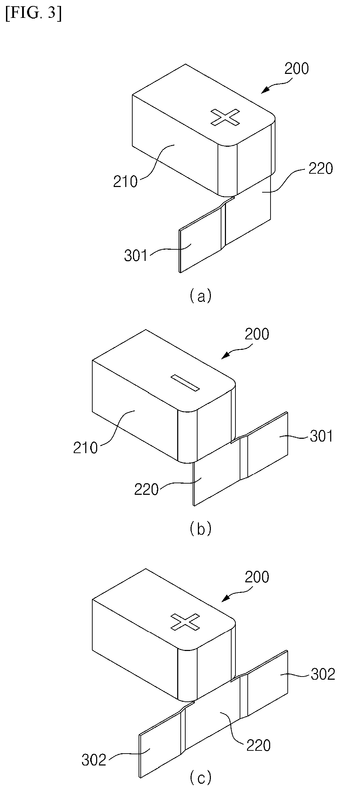

FIG. 3 is an illustration of various embodiments of the connection terminal 300, with three exemplary embodiments shown.

The connection terminal 300 is electrically connected to the extension terminal 220 of the terminal structure 200. For example, as shown, the connection terminal 300 may be integrally formed with the extension terminal 220, or, although not shown, a separately manufactured connection terminal 300 may be bonded to the extension terminal 220.

The connection terminal 300 extends along the thickness direction T of the secondary battery 100, which may be a unidirectional connection terminal 301 that extends in only one direction (+T direction or -T direction) of the thickness direction T, as shown in (a) and (b) of FIG. 3, or a bidirectional connection terminal 302 that extends in both directions (+T direction and -T direction), as shown in (c).

And, although the extension length of the connection terminal 300 is difficult to define uniformly, it can be said that it is necessary to have a length that can be reliably joined to the extension terminal 220 or the connection terminal 300 on the terminal structure 200 of another secondary battery 100 immediately adjacent in the thickness direction T of the secondary battery 100.

As described above, the connection terminal 300 is intended to electrically connect a plurality of secondary batteries 100 without a separate busbar by being electrically connected to an extension terminal 220 or connection terminal 300 of another secondary battery 100 that is adjacent to it in the thickness direction T. The various embodiments of the connection terminal 300 shown in FIG. 3 may be applied in various combinations for various electrical connections.

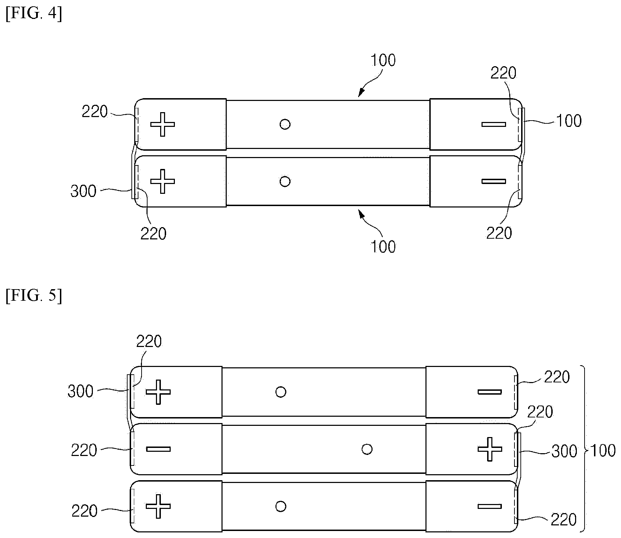

FIG. 4 is a diagram illustrating a structure in which two secondary batteries 100 are connected in parallel via a connection terminal 300. The two secondary batteries 100 adjacent to each other in the thickness direction T have terminal structures 200 at the positive terminal 120 and the negative terminal 130, respectively, and the two secondary batteries 100 are aligned so that the polarity of the terminals facing each other is the same.

In this way, a plurality of secondary batteries 100 arranged along the thickness direction T with electrode terminals 120 or 130 of the same polarity facing each other form a parallel circuit by connecting adjacent terminal structures 200 with a connection terminal 300.

FIG. 4 illustrates an exemplary embodiment in which the unidirectional connection terminal 401 and the extension terminal 220 are connected to each other, and although two secondary batteries 100 are illustrated, such parallel connections may be made in succession in the same pattern.

FIG. 5 is a diagram illustrating a structure in which three secondary batteries 100 are connected in series via a connection terminal 300. Two of the three secondary batteries 100 adjacent in the thickness direction T have unidirectional connection terminals 301 at the positive terminal 120 and the negative terminal 130, respectively, and the three secondary batteries 100 are arranged so that the terminal polarity of the secondary batteries 100 facing each other is opposite.

Since the polarity of the terminals of the secondary batteries 100 facing each other is opposite to each other, a series circuit is formed by connecting the adjacent terminal structures 200 with the connecting terminal 300. However, as shown in FIG. 5, the connection to the connection terminal 300 should be made only on one side of the facing secondary battery 100 and alternately while moving the secondary battery 100 one by one.

In this way, the plurality of secondary batteries 100 can be electrically connected by connecting the connection terminal 300 by aligning the plurality of secondary batteries 10 in the thickness direction T and aligning so that the polarity of the electrode terminals 120, 130 conform to the desired circuit connection. Of note, it will be readily understood that a serial-parallel circuit may be constructed by combining the parallel connection of FIG. 4 and the series connection of FIG. 5.

### (Second Embodiment)

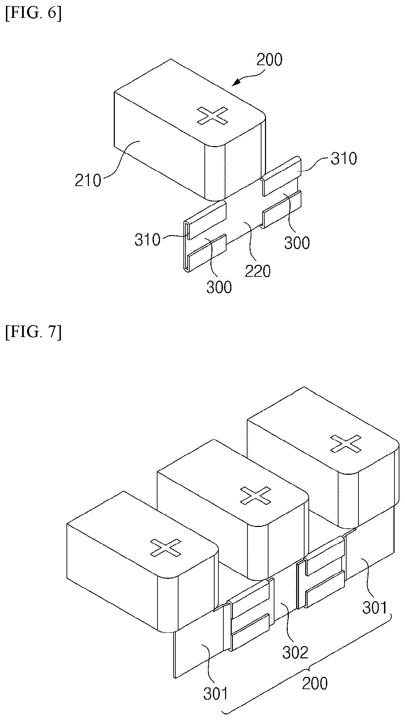

FIG. 6 is a diagram illustrating of a connection terminal 300 according to a second embodiment of the present invention.

The second embodiment of FIG. 6 is the same as the first embodiment described above in that the plurality of secondary batteries 100 can be directly connected using the connection terminals 300 along the thickness direction T, but there is a difference in the structure of interconnecting the connection terminals 300.

In the first embodiment shown in FIGS. 1 to 5, the connection terminal 300 provided on the terminal structure 200 extends to a length that can be bonded to the extension terminal 220 or the connection terminal 300 on the terminal structure 200 of another immediately adjacent secondary battery 100 in the thickness direction T, and does not include a special structure for bonding the connection terminal 300.

In comparison, in the second embodiment of FIG. 6, the end of one connection terminal 300 forms a slot 310 open in the thickness direction T, and correspondingly, the connection terminal 300 of another secondary battery 100 adjacent in the thickness direction T can be inserted into the slot 310.

FIG. 7 is a diagram exemplifying a structure in which a plurality of secondary batteries 100 are electrically connected using the connection terminal 300 of FIG. 6. In FIG. 7, three secondary batteries 100 are shown, wherein the terminal structure 200 of the secondary battery 100 located at the center is provided with a bidirectional connection terminal 302 corresponding to (c) of FIG. 3, and a slot 310 is formed at both ends of the bidirectional connection terminal 302. Correspondingly, the secondary batteries 100 on both sides are provided with simple unidirectional connection terminals 301 without slots 310, and two unidirectional connection terminals 301 are interconnected by being inserted into the slots 310 of the bidirectional connection terminals 302 respectively.

Accordingly, according to the second embodiment of the present invention, the connection terminals 300 of the terminal structure 200 of the plurality of secondary batteries 100 form a slot structure, thereby facilitating the mutual coupling and electrical connection of the connection terminals 300. In other words, in the first embodiment, the electrical connection between the plurality of secondary batteries 100 is completed only through a bonding between the connection terminals 300, but in the second embodiment, the connection terminals 300 can be firmly contacted through the slot structure, so that the electrical connection is made even in the assembled state.

Of course, in the slot structure of the second embodiment, the slots 310 can be used to connect the connection terminals 300 in a kind of prefabricated state, and then a bonding process such as welding can be performed to complete a more robust connection.

The present invention has been described above in more detail through the drawings and embodiments. However, the configurations described in the drawings or the embodiments in the specification are merely embodiments of the present invention and do not represent all the technical ideas of the present invention. Thus, it is to be understood that there may be various equivalents and variations in place of them at the time of filing the present application.

### [Reference numerals]

100: SECONDARY BATTERY
110: BATTERY CASE
120: POSITIVE TERMINAL
130: NEGATIVE TERMINAL
150: CAP PLATE
160: ELECTRODE ASSEMBLY
200: TERMINAL STRUCTURE
210: TERMINAL BODY
220: EXTENSION TERMINAL
230: EXTENSION WIRE
300: CONNECTION TERMINAL
301: UNIDIRECTIONAL CONNECTION TERMINAL
302: BIDIRECTIONAL CONNECTION TERMINAL
310: SLOT
W: WIDTH DIRECTION
T: THICKNESS DIRECTION
H: HEIGHT DIRECTION

## Claims

1. A secondary battery (100) with a positive terminal (120) and a negative terminal (130) spaced apart on a top surface of a hexahedral shape battery case (110), the secondary battery (100) comprising:
a terminal structure (200) comprising a terminal body (210) which is made of insulating resin material and coupled to the top surface of the battery case (110) and one or more faces extending from the top surface while enclosing the positive terminal (120) or the negative terminal (130) so that it is not exposed, and an extension terminal (220) electrically connected to the positive terminal (120) or the negative terminal (130) and exposed to any one surface of the terminal bodies (210) except the top surface, and having a connection terminal (300, 301, 302) facing the thickness direction (T) of the secondary battery (100) on the extension terminal (220).

2. The secondary battery (100) of claim 1, wherein,
an extension wire (230) electrically connecting the extension terminal (220) to the positive terminal (120) or negative terminal (130) is not exposed outside the terminal body (210).

3. The secondary battery (100) of claim 1, wherein,
an extension wire (230) electrically connecting the extension terminal (220) to the positive terminal (120) or negative terminal (130) is insulated from the outside.

4. The secondary battery (100) of claim 1, wherein,
the terminal body (210) is coupled to the top surface of the battery case (110) and a side surface extending from the top surface, and
the extension terminal (220) is exposed on the side surface.

5. The secondary battery (100) of claim 4, wherein,
the terminal structure (200) is coupled to the positive and negative terminals (130) one by one.

6. The secondary battery (100) of claim 5, wherein,
the connection terminal (300, 301, 302) extends in either one or both directions of the thickness direction (T).

7. The secondary battery (100) of claim 6, wherein,
the connection terminal (300, 301, 302) is electrically connected to an extension terminal (220) or connection terminal (300, 301, 302) of another adjacent secondary battery (100).

8. The secondary battery (100) of claim 7, wherein,
the secondary battery (100) is provided in a plurality of secondary batteries (100) aligned in a thickness direction (T), and
the connection terminals (300, 301, 302) provided on each secondary battery (100) are connected in series or parallel to the extension terminals (220) or connection terminals (300, 301, 302) of an adjacent secondary battery (100).

9. The secondary battery (100) of claim 1, wherein,
the connection terminal (300, 301, 302) is integrally formed with the extension terminal (220).

10. The secondary battery (100) of claim 7, wherein,
the end of the connection terminal (300, 301, 302) forms a slot (310) open in the thickness direction (T).

11. The secondary battery (100) of claim 10, wherein,
a connection terminal (300, 301, 302) of an adjacent secondary battery (100) is inserted into the slot (310) of the connection terminal (300, 301, 302) of the secondary battery (100).

## Patentansprüche

1. Sekundärbatterie (100) mit einem positiven Anschluss (120) und einem negativen Anschluss (130), die auf einer oberen Oberfläche eines Batteriegehäuses (110) in hexaedrischer Form beabstandet sind, wobei die Sekundärbatterie (100) umfasst:
eine Anschlussstruktur (200), die einen Anschlusskörper (210), der aus isolierendem Harzmaterial hergestellt ist und mit der oberen Oberfläche des Batteriegehäuses (110) gekoppelt ist, und eine oder mehrere Flächen, die sich von der oberen Oberfläche erstrecken, während sie den positiven Anschluss (120) oder den negativen Anschluss (130) umschließen, so dass er nicht freiliegt, und einen Verlängerungsanschluss (220) umfasst, der mit dem positiven Anschluss (120) oder dem negativen Anschluss (130) elektrisch verbunden ist und zu einer beliebigen Oberfläche der Anschlusskörper (210) mit Ausnahme der oberen Oberfläche freiliegt, und einen Verbindungsanschluss (300, 301, 302) aufweist, der der Dickenrichtung (T) der Sekundärbatterie (100) auf dem Verlängerungsanschluss (220) zugewandt ist.

2. Sekundärbatterie (100) nach Anspruch 1, wobei
ein Verlängerungsdraht (230), der den Verlängerungsanschluss (220) mit dem positiven Anschluss (120) oder dem negativen Anschluss (130) elektrisch verbindet, außerhalb des Anschlusskörpers (210) nicht freiliegt.

3. Sekundärbatterie (100) nach Anspruch 1, wobei
ein Verlängerungsdraht (230), der den Verlängerungsanschluss (220) mit dem positiven Anschluss (120) oder dem negativen Anschluss (130) elektrisch verbindet, von der Außenseite isoliert ist.

4. Sekundärbatterie (100) nach Anspruch 1, wobei
der Anschlusskörper (210) mit der oberen Oberfläche des Batteriegehäuses (110) und einer sich von der oberen Oberfläche erstreckenden Seitenfläche gekoppelt ist, und
der Verlängerungsanschluss (220) auf der Seitenfläche freiliegt.

5. Sekundärbatterie (100) nach Anspruch 4, wobei
die Anschlussstruktur (200) einzeln mit dem positiven und dem negativen Anschluss (130) gekoppelt ist.

6. Sekundärbatterie (100) nach Anspruch 5, wobei
sich der Verbindungsanschluss (300, 301, 302) in einer oder beiden Richtungen der Dickenrichtung (T) erstreckt.

7. Sekundärbatterie (100) nach Anspruch 6, wobei
der Verbindungsanschluss (300, 301, 302) mit einem Verlängerungsanschluss (220) oder einem Verbindungsanschluss (300, 301, 302) einer anderen benachbarten Sekundärbatterie (100) elektrisch verbunden ist.

8. Sekundärbatterie (100) nach Anspruch 7, wobei
die Sekundärbatterie (100) in einer Vielzahl von Sekundärbatterien (100) bereitgestellt ist, die in einer Dickenrichtung (T) ausgerichtet sind, und
die Verbindungsanschlüsse (300, 301, 302), die an jeder Sekundärbatterie (100) bereitgestellt sind, in Reihe oder parallel mit den Verlängerungsanschlüssen (220) oder den Verbindungsanschlüssen (300, 301, 302) einer benachbarten Sekundärbatterie (100) verbunden sind.

9. Sekundärbatterie (100) nach Anspruch 1, wobei
der Verbindungsanschluss (300, 301, 302) mit dem Verlängerungsanschluss (220) einstückig ausgebildet ist.

10. Sekundärbatterie (100) nach Anspruch 7, wobei
das Ende des Verbindungsanschlusses (300, 301, 302) einen Schlitz (310) bildet, der in der Dickenrichtung (T) offen ist.

11. Sekundärbatterie (100) nach Anspruch 10, wobei
ein Verbindungsanschluss (300, 301, 302) einer benachbarten Sekundärbatterie (100) in den Schlitz (310) des Verbindungsanschlusses (300, 301, 302) der Sekundärbatterie (100) eingesetzt ist.

## Revendications

1. Batterie secondaire (100) possédant une borne positive (120) et une borne négative (130) espacées l'une de l'autre sur une surface supérieure d'un boîtier de batterie de forme hexaédrique (110), la batterie secondaire (100) comprenant :
une structure de bornes (200) comprenant un corps de borne (210), réalisé avec un matériau de résine isolante et couplé à la surface supérieure du boîtier de la batterie (110), et une ou plusieurs faces partant de la surface supérieure, tout en contenant la borne positive (120) ou la borne négative (130) de sorte qu'elle ne soit pas exposée, et une borne d'extension (220) connectée électriquement à la borne positive (120) ou à la borne négative (130) et exposée à une surface quelconque des corps de borne (210), à l'exception de la surface supérieure, et ayant une borne de connexion (300, 301, 302) située face au sens de l'épaisseur (T) de la batterie secondaire (100) sur la borne d'extension (220).

2. Batterie secondaire (100) selon la revendication 1,
un câble d'extension(230) reliant électriquement la borne d'extension (220) à la borne positive (120) ou à la borne négative (130) n'étant pas exposé à l'extérieur du corps de la borne (210).

3. Batterie secondaire (100) selon la revendication 1,
un câble d'extension (230) reliant électriquement la borne d'extension (220) à la borne positive (120) ou à la borne négative (130) étant isolé de l'extérieur.

4. Batterie secondaire (100) selon la revendication 1,
le corps de la borne (210) étant couplé à la surface supérieure du boîtier de la batterie (110) et à une surface latérale s'étendant depuis la surface supérieure, et
la borne d'extension (220) étant exposée sur la surface latérale.

5. Batterie secondaire (100) selon la revendication 4,
la structure des bornes (200) étant couplée une à une aux bornes positive et négative (130).

6. Batterie secondaire (100) selon la revendication 5,
la borne de connexion (300, 301, 302) s'étendant dans une direction du sens de l'épaisseur (T), ou les deux.

7. Batterie secondaire (100) selon la revendication 6,
la borne de connexion (300, 301, 302) étant connectée électriquement à une borne d'extension (220) ou à une borne de connexion (300, 301, 302) d'une autre batterie secondaire adjacente (100).

8. Batterie secondaire (100) selon la revendication 7,
la batterie secondaire (100) étant agencée dans une pluralité de batteries secondaires (100) alignées dans un sens de l'épaisseur (T), et
les bornes de connexion (300, 301, 302) agencées sur chaque batterie secondaire (100) étant connectées en série ou en parallèle aux bornes d'extension (220) ou aux bornes de connexion (300, 301, 302) d'une batterie secondaire adjacente (100).

9. Batterie secondaire (100) selon la revendication 1,
la borne de connexion (300, 301, 302) étant solidaire de la borne d'extension (220).

10. Batterie secondaire (100) selon la revendication 7,
le bout de la borne de connexion (300, 301, 302) formant une fente (310) ouverte dans le sens de l'épaisseur (T).

11. Batterie secondaire (100) selon la revendication 10,
une borne de connexion (300, 301, 302) d'une batterie secondaire adjacente (100) étant insérée dans la fente (310) de la borne de connexion (300, 301, 302) de la batterie secondaire (100).
